# EUROPÄISCHE PATENTSCHRIFT

(11) **EP 1 594 361 B1**
(45) Veröffentlichungstag und Bekanntmachung des Hinweises auf die Patenterteilung: **29.12.2010**
(21) Anmeldenummer: 04704195.9
(22) Anmeldetag: 22.01.2004
(51) Int. Cl.: A01N 47/20

(54) **WÄSSRIGE ZUSAMMENSETZUNG ENTHALTEND CHLORPROPHAM UND DEREN VERWENDUNG ZUR KEIMHEMMUNG VON KARTOFFELN**
AQUEOUS COMPOSITION CONTAINING CHLORPROPHAM AND THE USE THEREOF FOR INHIBITING THE GERMINATION OF POTATOES
COMPOSITION AQUEUSE CONTENANT DU CHLORPROPHAME ET SON UTILISATION POUR INHIBER LA GERMINATION DE POMMES DE TERRE

(30) Priorität: 13.02.2003 DE 10305858; 27.06.2003 DE 10328943
(43) Veröffentlichungstag der Anmeldung: 16.11.2005
(73) Patentinhaber: CERA CHEM S.A.R.L., 6684 Mertert (LU)
(72) Erfinder: MÜLLER, Jacki, 50374 Erftstadt (DE)
(74) Vertreter: Flaccus, Rolf-Dieter
(86) Internationale Anmeldenummer: PCT/EP2004/000484
(87) Internationale Veröffentlichungsnummer: WO 2004/071196

(56) Entgegenhaltungen:
- EP-A- 1 023 833
- DD-A- 292 361

## Beschreibung

Die vorliegende Erfindung betrifft wässrige Zusammensetzungen, die Chlorpropham enthalten, sowie die Verwendung dieser Zusammensetzungen als Herbizid und keimhemmendes Mittel bei der Lagerung von Kartoffeln.

In der Bundesrepublik Deutschland und seinen westeuropäischen Nachbarländern Belgien, Frankreich und den Niederlanden werden zur Zeit etwa 740.000 ha Kartoffel angebaut. Ein großer Teil der geernteten Kartoffeln wird für den späteren Einsatz als Pflanzgut oder auch für eine spätere, dem Verzehr dienende Verarbeitung gelagert. Dabei ist der Qualitätserhalt der Kartoffeln nach ihrer Ernte im wesentlichen von den Lagerbedingungen abhängig. Während ihrer Lagerung sind hauptsächlich die Temperatur und die Luftfeuchtigkeit im Lagerraum für den Erhalt der Qualität der Kartoffeln von Bedeutung.

Ist die Luftfeuchtigkeit während der Lagerung zu hoch so bildet sich Fäulnis. Ist die Luftfeuchtigkeit zu niedrig, so lässt der Turgordruck auf die Zellwand nach und die Kartoffel wird weich.

Während ihrer Lagerung können die Kartoffeln auslaufen. Unter Auslaufen wird die Bildung von Sprossen verstanden. Da die Kartoffel selber der Nährboden für die Ausläufer bzw. Sprossen ist, wird die Qualität der Kartoffel durch die Bildung der Ausläufer schlechter, unter anderem weil der Frucht Nährstoffe entzogen werden.

Für eine gute Lagerung gilt: je niedriger die Temperatur, um so weniger keimen die Knollen aus. Bei Temperaturen unter 6°C bildet sich jedoch Zucker aus der Kartoffelstärke, da bei diesen niedrigen Temperaturen die Kartoffelstärke durch die weniger kälteempfindlichen Hydrolasen zwar weiterhin zu Zucker umgewandelt wird, dieser jedoch durch die kälteempfindlichen und deshalb blockierten Atmungsenzyme nicht weiter zu CO₂ und H₂O metabolisiert wird. Der Zuckergehalt einer Kartoffel kann so von normalerweise 0,3% auf bis zu 7% steigen. Bei Temperaturen von 0°C und knapp darunter wird zudem eine Eisbildung vermieden. Üblicherweise werden Industriekartoffeln für die Veredelung bei Temperaturen zwischen 7°C und 9°C und Speise- sowie Pflanzkartoffeln bei Temperaturen zwischen 3°C und 5°C gelagert, auch wenn bei diesen Temperaturen das Ausbilden von Sprossen nicht optimal unterdrückt wird.

Aufgrund des entstandenen Zuckers bekommen die Kartoffel und die beispielsweise aus Back- oder Frittierprozessen gewonnenen Verarbeitungsprodukte dieser Kartoffeln jedoch einen süßlichen Geschmack und die Verarbeitungsprodukte erhalten beim Backen oder Frittieren eine unerwünschte Bräune.

Um eine Sprossbildung bei Temperaturen, bei denen nur eine geringe Zuckerbildung erfolgt, zu vermeiden, werden die Kartoffeln vor ihrer Lagerung mit keimhemmenden Mitteln behandelt.

Der wichtigste keimhemmende Wirkstoff, der bei der Lagerung von Kartoffeln verwendet wird, ist Chlorpropham.

Chlorpropham (N-(3-Chlorphenyl)-isopropylcarbamat) ist ein Wirkstoff, der seit etwa 40 Jahren in der Landwirtschaft zum Einsatz kommt. Ursprünglich wurde Chlorpropham als Herbizid sowohl für die Vor- als auch für die Nachablaufapplikation, insbesondere bei Blumenzwiebeln und -knollen verwendet. Etwas später wurde auch die Verwendung von Chlorpropham als Keimhemmungsmittel beschrieben und zur Keimhemmung bei Kartoffeln eingesetzt. Seit dem hat die Verwendung von Chlorpropham als Keimhemmungsmittel dessen Bedeutung als Herbizid bei weitem übertroffen.

Für den Einsatz als Keimhemmungsmittel ist Chlorpropham bislang als Pulver oder auf Ölbasis formuliert im Handel erhältlich. Entsprechend des verwendeten Formulierungstyps werden diese Zubereitungen verstäubt oder versprüht bzw. vernebelt. Aber sowohl die Verwendung von Chlorpropham als Stäubemittel als auch als Sprühmittel auf Ölbasis hat gravierende Nachteile.

Als Herbizid ist Chlorpropham als EC (emulgierbares Konzentrat) formuliert, wobei meistens Xylol als Lösungsmittel Verblendung findet. Solchermaßen formulierte Produkte sind auf Grund der verwendeten Lösungsmittel meist feuergefährlich und wegen der Hautresorption sowie der Lösungsmitteldämpfe gesundheitsschädlich, so dass sie den heutigen Sicherheitserfordernissen nicht mehr genügen.

Durch die Verstäubung von Chlorpropham-haltigen Pulvern ist eine homogene Verteilung des Chlorprophams nicht zu realisieren. Darüber hinaus haften Pulver naturgemäß schlecht auf der Oberfläche von Kartoffeln und der auf der Kartoffel haftende Wirkstoff geht durch weitere Bewegungen und andere Maßnahmen bis zur Lagerstätte verloren.

Der Wirkungsgrad von Chlorpropham-haltigen Pulvern ist somit vergleichsweise schlecht und beträgt nur etwa 60% im Vergleich zu den bekannten, besser haftenden und auch gleichmäßiger auszubringenden Emulsionskonzentraten.

Zudem ist eine Verwendung von Chlorpropham in Form von verstäubbaren Pulvern aus arbeitssicherheitstechnischen Gründen nicht mehr zeitgemäß.

Die Verwerdung von Chlorpropham als Emulsionskonzentrat auf Basis von mineralischen, tierischen oder pflanzlichen Ölen, wie sie in DE 299 06 961 U1 offenbart wird, bietet gegenüber der Verwendung von Chlorpropham-haltigen Pulvern Vorteile hinsichtlich einer besseren Haftung des Wirkstoffs auf der Kartoffel, einer gleichmäßigeren Verteilung des Wirkstoffs, einer höheren wirkstoffkonzentration und einer besseren Sicherheit am Arbeitsplatz.

Öle bleich welcher Provenienz weisen aber einen mehr oder weniger stark ausgeprägten Eigengeruch oder Eigengeschmack auf. Insbesondere durch die Folgen von Oxidationsprozessen, wie sie bei dem bei der Lagerung gegebenen permanenten Sauerstoffzutritt hervorgerufen werden, ist die Verwendbarkeit mancher Öle stark limitiert.

Die DE 299 06 961 beschreibt auch die Verwendung von Lösungsmittel mineralischen Ursprungs, einschließlich aliphatischer und aromatischer Lösungsmittel, zur Herstellung Chlorpropham-haltiger Zubereitungen. Aber je nach verwendetem Lösungsmittel ergeben sich andere Nachteile, beispielsweise ein niedriger Flammpunkt der Zubereitung oder Explosionsgefahr.

In DD 292 361 A5 wird ein Mittel zur temporären Keimhemmung von Pflanzkartoffeln beschrieben, das als wäßriges Suspensionskonzentrat formuliert ist und einen Chlorpropham-Gehalt von 0,6 bis 0,8 % aufweist. Ferner enthalten diese wäßrigen Suspensionskonzentrate 16 bis 18% höhere Fettalkohole, 20% Ethylenglykol sowie ein Tensid. In den Formulierungsbeispielen liegt der Tensidgehalt bei 0,2 %.

EP 1 023 833 A2 offenbart emulgierbare Konzentrate (EC) von Pflanzenschutzwirkstoffen wie z. B. Chlorpropham. Es handelt sich hierbei um nicht-wäßrige Konzentrate, die auf der Basis von wassermischbaren aprotischen Lösemitteln, optional unter Zusatz von organischen Lösemitteln, hergestellt sind. Die emulgierbaren Konzentrate enthalten ferner ein emulgierendes Tensidsystem, das im wesentlichen aus einem oder mehreren nichtionischen Tensiden und einem oder mehreren anionischen Tensiden besteht. Der Wirkstoffgehalt liegt bevorzugt bei 150 bis 350 g/l und der Tensidgehalt bei 20 bis 150 g/l. Die emulgierbaren Konzentrate können vor ihrer Verwendung zur Unkraut- oder Schädlingsbekämpfung mit Wasser verdünnt werden, wobei eine Öl-in-Wasser-Emulsion gebildet wird.

Aufgabe der vorliegenden Erfindung war daher, eine flüssige Zusammensetzung von Chlorpropham bereitzustellen, bei der auf die Verwendung von Ölen und/oder Lösungsmitteln verzichtet wird.

Überraschenderweise wurde gefunden, dass der Wirkstoff Chlorpropham in flüssige Phase mit verschiedenen Tensiden eine klare, selten aber auch leicht trübe, homogene Phase bildet, die in Wasser spontan emulgiert.

Die resultierenden Emulsionen sind kinetisch stabil. Sie sind niedrig viskos, geruchlos und zeichnen sich durch eine geringe Schaumbildung aus, die durch den Zusatz von Entschäumern auch völlig unterdrückt werden kann. Die Emulsionen haben eine niedrige Oberflächenspannung, was eine optimale Benetzung der Kartoffel bei ihrer Behandlung gewährleistet.

Die erfindungsgemäßen wässrigen, Chlorpropham enthaltenden Zusammensetzungen sind für eine direkte Applikation ebenso geeignet, wie für eine Applikation nach zusätzlicher Verdünnung. Im Unterschied zu den bekannten ölhaltigen Emulsionen bestehen die erfindungsgemäßen Zusammensetzungen lediglich aus dem Wirkstoff, Wasser und den erfindungsgemäß geeigneten Tensiden. Gegebenenfalls können der erfindungsgemäßen zusammensetzung Frostschutz- und/oder Antischaumnittel zugesetzt werden.

Daher sind die erfindungsgemäßen Emulsionen sowohl ökologisch als auch ökonomisch von besonderem Vorteil. So liegen die Herstellungskosten für die erfindungsgemäßen Emulsionen etwa 50% unter denen vergleichbar konzentrierter Zubereitungen auf Ölbasis.

Als Tenside für die Herstellung der erfindungsgemäßen Zusammensetzungen sind Fettalkoholpolyglykolether, Fettalkoholpolyglykoletherphosphorsäureester, Sorbitanester, ethoxylierte Sorbitanester, vorzugsweise mit 4 bis 25 Ethoxy-Einheiten, besonders bevorzugt mit 15 bis 20 Ethoxy-Einheiten, und polyethoxylierte Alkohole, vorzugsweise mit 5 bis 10 Ethoxy-Einheiten, geeignet. Bevorzugte Fettalkoholpolyglykolether sind die Fettalkoholpolyglykolether des Lauryl- und Oleylalkohols sowie des Tridecanols, besonders bevorzugt wird Ethoxy(5)-monooleylether. Ein bevorzugter Fettalkoholpolyglykoletherphosphorsäureester ist der Ethoxy(5)-isotridecanolsäurephosphorsäureester. Bevorzugte Sorbitanester sind Sorbitanmono-laurat, Sorbitanmonooleat, Sorbitansesquioleat, Sorbitantrioleat oder Sorbitanmonoisostearat. Besonders bevorzugte ethoxylierte Sorbitanester sind die des Sorbitanmonolaurats und des Sorbitanmono-oleats, wobei Poly(20)-ethoxylsorbitanmonolaurat ganz besonders bevorzugt wird. Als besonders bevorzugter ethoxylierter Alkohol ist Ethoxy(7)-tridecanol geeignet.

Um bei einer gegebenen Chlorpropham-Konzentration eine optimale, stabile Emulsion zu erhalten, können auch Mischungen von zwei oder mehr der vorgenannten Tenside verwendet werden.

Praxisgerechte Konzentrationen von Chlorpropham liegen bei den erfindungsgemäßen Emulsionen zwischen 20 g und 400 g Chlorpropham pro Liter, vorzugsweise zwischen 50 g/l und 200 g/l und besonders bevorzugt zwischen 75 g/l und 125 g/l*.*

Die für die Herstellung einer erfindungsgemäßen, stabilen wässrigen Emulsion erforderliche Tensidmenge beträgt bei diesen Wirkstoffkonzentrationen zwischen 70 g/l und 150 g/l.

Diese Mengenangaben sind mit den in DE 299 06 961 genannten Mengen vergleichbar, jedoch wird bei der erfindungsgemäßen Zusammensetzung weder ein Öl noch ein Lösungsmittel oder Lösungsvermittler als Träger verwendet.

Die erfindungsgemäßen Emulsionen zeichnen sich durch eine geringe Schaumbildung aus, die durch den Zusatz von Entschäumern auch völlig unterdrückt werden kann. Als Entschäumer sind beispielsweise Tensiofix LO 51^{®}, Atplus 702^{®} (ein Siliconentschäumer), Rhodorsil Antifoam 416^{®} (Polydimethylsiloxan + SiO₂ + nicht ionische Tenside), Rhodorsil Antifoam 432^{®} (Polydimethylsiloxan als nicht ionische Emulsion) oder Rhodorsil Antifoam 454^{®} und besonders bevorzugt Rhodorsil Antifoam 426 oder 426R^{®} geeignet.

Entschäumer können in der erfindungsgemäßen Emulsion in einer Menge von 2 g/l bis 15 g/l vorhanden sein.

Um gegebenenfalls eine Froststabilität der erfindungsgemäßen Emulsion zu gewährleisten, kann der Emulsion noch ein geeignetes Frostschutzmittel zugesetzt werden. Als Frostschutzmittel für die erfindungsgemäßen Emulsionen haben sich insbesondere Glycerin, Propylenglykol, Monoethylenglykol (MEG) und Diethylenglykol (DEG) als geeignet erwiesen, wobei Glycerin bevorzugt wird.

Das Frostschutzmittel kann in der Chlorpropham enthaltenden wässrigen Zusammensetzung in einer Menge von 40 g/l bis 150 g/l, vorzugsweise in einer Menge von 80 g/l bis 120 g/l vorhanden sein.

Im Vergleich zu den aus dem Stand der Technik bekannten Zubereitungen mit Chlorpropham enthalten die erfindungsgemäßen Zusammensetzungen keine Öle und/oder Lösungsmittel, sie sind ökologisch verträglicher und ökonomischer, zeigen im Vergleich zu Pulvern eine homogenere Verteilung des Wirkstoffs auf der Kartoffel bei gleichzeitig besserer Haftung. Darüber hinaus enthalten die erfindungsgemäßen Zusammensetzungen keine toxikologisch bedenklichen Komponenten und weisen einen hohen Flammpunkt auf.

Die erfindungsgemäßen Zusammensetzungen enthaltend Chlorpropham können zur Keimhemmung von Kartoffeln oder als Herbizid verwendet werden. Bei Verwendung als Herbizid sollte die Aufwandsmenge 2000 bis 3000 g Chlorpropham pro ha betragen.

### Beispiele

Nachfolgend werden Rezepturen angegeben, die als Beispiele für erfindungsgemäße Formulierungen dienen.

| Beispiel | 1 | 2 | 3 | 4 | 5 | 6 | 7 | 8 | 9 | 10 |
|---|---|---|---|---|---|---|---|---|---|---|
| Chlorpropham | 9 | 9 | 10 | 10 | 15 | 15 | 9 | 9 | 10 | 15 |
| Volpo T7/85 ^{®} POE (7) - Tridecylalkohol | 10 | 8 | 10 | | | | 10 | 8,5 | | |
| Volpo N5 ^{®} POE (5) - Oleylalkohol | | | | 10 | | 10 | | | 10,5 | |
| Crillet 1 ^{®} POE (20) - Sorbitanmonolaurat | | | | 5 | 5 | 5 | | | 4 | 5,5 |
| Cordaphos T5A^{®} POE (5) - Tridecyletherphospat | 5 | 7 | | | 10 | | 5 | 6,5 | | 9 |
| DEG | | | | | | 10 | | | | |
| Glycerin | | 10 | 10 | 10 | | | | | | |
| MEG | 10 | | | | 10 | | | | | |
| Entschäumer | 0,2 | 0,2 | 0,3 | 0,2 | 0,2 | 0,2 | | | | |
| Wasser | 65,8 | 65,8 | 69,7 | 64,8 | 59,8 | 59,8 | 76 | 76 | 75,5 | 70,5 |

| | | | | | | | | | | |
|---|---|---|---|---|---|---|---|---|---|---|
| Alle Angaben in Gew.% | | | | | | | | | | |

## Patentansprüche

1. Wässrige Zusammensetzung zur Verwendung als Keimhemmungsmittel bei Kartoffeln sowie als Herbizid, umfassend eine Kombination von Chlorpropham und mindestens einem Tensid, **dadurch gekennzeichnet, daß** die Zusammensetzung eine wässrige Emulsion ist, die keine Öle oder Lösungsmittel enthält, wobei Chlorpropham in einem Mengenanteil von mindestens 20 g/l bis 400 g/l vorhanden ist und der Tensidanteil 70 g/l bis 150 g/l beträgt und wobei das Tensid/die Tenside aus der Gruppe ausgewählt ist/sind, die aus Fettalkoholpolyglykolethern, Fettalkoholpolyglykoletherphosphorsäureestern, Sorbitanestern, ethoxylierten Sorbitanestern und polyethoxylierten Alkoholen besteht.

2. Zusammensetzung nach Anspruch 1, **dadurch gekennzeichnet, dass** Chlorpropham in einer Menge von 50 g/l bis 200 g/l, bevorzugt von 75 g/l bis 125 g/l, vorhanden ist.

3. Zusammensetzung nach Anspruch 1, **dadurch gekennzeichnet, dass** der Fettalkoholpolyglykolether ein Polyglykolether-Derivat des Laurylalkohols, Oleylalkohols oder Tridecanols ist, wobei Ethoxy(5)-monooleylether besonders bevorzugt wird.

4. Zusammensetzung nach Anspruch 1, **dadurch gekennzeichnet, dass** es sich bei dem Fettalkoholpolyglykoletherphosphor-säureester um Ethoxy(5)-isotridecanolsäurephosphorsäure-ester handelt.

5. Zusammensetzung nach Anspruch 1, **dadurch gekennzeichnet, dass** der Sorbitanester aus der Gruppe ausgewählt ist, die aus Sorbitanmonolaurat, Sorbitanmonooleat, Sorbitansesqui-oleat, Sorbitantrioleat und Sorbitanmonoisostearat besteht.

6. Zusammensetzung nach Anspruch 1, **dadurch gekennzeichnet, dass** es sich bei den ethoxylierten Sorbitanestern um Sorbitanester mit 4 bis 25 Ethoxy-Einheiten, vorzugsweise um Sorbitanester mit 15 bis 20 Ethoxy-Einheiten handelt.

7. Zusammensetzung nach Anspruch 6, **dadurch gekennzeichnet, dass** es sich bei den ethoxylierten Sorbitanestern um Sorbitanmonolaurat- oder Sorbitanmonooleat-Derivate handelt, wobei Poly(20)-ethoxylsorbitansäuremonolaurat besonders bevorzugt wird.

8. Zusammensetzung nach Anspruch 1, **dadurch gekennzeichnet, dass** es sich bei den ethoxylierten Alkoholen um ethoxylierte Alkohole mit 5 bis 10 Ethoxy-Einheiten handelt, wobei Ethoxy(7)-tridecanol besonders bevorzugt wird.

9. Zusammensetzung nach einem der vorangehenden Ansprüche, **dadurch gekennzeichnet, dass** sie einen Entschäumer umfasst.

10. Zusammensetzung nach Anspruch 9, **dadurch gekennzeichnet, dass** der Entschäumer aus der Gruppe ausgewählt ist die aus Rhodorsil Antifoam 416^{®}, Rhodorsil Antifoam 426^{®}, Rhodorsil Antifoam 426R^{®}, Rhodorsil Antifoam 432^{®}, Rhodorsil Antifoam 454^{®}, Tensiofix LO 51^{®} und Atplus 702^{®} besteht.

11. Zusammensetzung nach Anspruch 9 oder 10, **dadurch gekennzeichnet, dass** der Entschäumer in einer Menge von 2 g/l bis 15 g/l vorhanden ist.

12. Zusammensetzung nach einem der vorangehenden Ansprüche, **dadurch gekennzeichnet, dass** sie ein Frostschutzmittel enthält.

13. Zusammensetzung nach Anspruch 12, **dadurch gekennzeichnet, dass** das Frostschutzmittel aus der Gruppe ausgewählt ist, die aus Monoethylenglykol, Diethylenglykol, Propylenglykol und Glycerin besteht.

14. Zusammensetzung nach Anspruch 12 oder 13, **dadurch gekennzeichnet, dass** das Frostschutzmittel in einer Menge von 40 g/l bis 150 g/l, vorzugsweise in einer Menge von 80 g/l bis 120 g/l, vorhanden ist.

15. Zusammensetzung nach einem der vorangehenden Ansprüche, **dadurch gekennzeichnet, dass** Chlorpropham mit dem/den Tensid(en) eine emulgierte Phase bildet.

16. Zusammensetzung nach einem der vorangehenden Ansprüche, **dadurch gekennzeichnet, dass** sie aus Wasser, dem Wirkstoff Chlorpropham und dem/den genannten Tensid(en) besteht, wobei optional zusätzlich Frostschutz- und/oder Antischaummittel enthalten sein können.

17. Verwendung der Zusammensetzung nach einem der vorangehenden Ansprüche zur Hemmung des Keimens von Kartoffeln.

18. Verwendung der Zusammensetzung nach einem der Ansprüche 1 bis 17 als Herbizid.

19. Verwendung nach Anspruch 18, **dadurch gekennzeichnet, dass** die Aufwandsmenge 2000 bis 3000 g Chlorpropham pro ha beträgt.

## Claims

1. Aqueous composition for use as a germination inhibitor for potatoes and as a herbicide, comprising a combination of chlorpropham and at least one surface-active agent, **characterised in that** said composition is an aqueous emulsion not containing any oils or solvents, said chlorpropham being present in a constituent amount of at least 20 g/l to 400 g/l and the surface-active agent portion being 70 g/l to 150 g/l, and said surface-active agent(s) being selected from the group consisting of fatty alcohol polyglycol ethers, fatty alcohol polyglycol ether phosphoric acid esters, sorbitan esters, ethoxylated sorbitan esters and polyethoxylated alcohols.

2. Composition according to claim 1, **characterised in that** chlorpropham is present in an amount of 50 g/l to 200 g/l, preferably 75 g/l to 125 g/l.

3. Composition according to claim 1, **characterised in that** said fatty alcohol polyglycol ether is a polyglycol ether derivative of lauryl alcohol, oleyl alcohol or tridecanol, with ethoxy (5) monooleyl ether being especially preferred.

4. Composition according to claim 1, **characterised in that** said fatty alcohol polyglycol ether phosphoric acid ester is ethoxy (5) isotridecanol acid phosphoric acid ester.

5. Composition according to claim 1, **characterised in that** said sorbitan ester is selected from the group consisting of sorbitan monolaurate, sorbitan monooleate, sorbitan sesquioleate, sorbitan trioleate and sorbitan monoisostearate.

6. Composition according to claim 1, **characterised in that** said ethoxylated sorbitan esters are sorbitan esters with 4 to 25 ethoxy units, preferably sorbitan esters with 15 to 20 ethoxy units.

7. Composition according to claim 6, **characterised in that** said ethoxylated sorbitan esters are sorbitan monolaurate derivatives or sorbitan monooleate derivatives, with polyoxyethylene (20) sorbitan acid monolaurate being especially preferred.

8. Composition according to claim 1, **characterised in that** said ethoxylated alcohols are ethoxylated alcohols with 5 to 10 ethoxy units, with ethoxy (7) tridecanol being especially preferred.

9. Composition according to any one of the preceding claims, **characterised in that** it comprises a defoamer.

10. Composition according to claim 9, **characterised in that** said defoamer is selected from the group consisting of Rhodorsil Antifoam 416^{®}, Rhodorsil Antifoam 426^{®}, Rhodorsil Antifoam 426R^{®}, Rhodorsil Antifoam 432^{®}, Rhodorsil Antifoam 454^{®}, Tensiofix LO 51^{®} and Atplus 702^{®}.

11. Composition according to claim 9 or 10, **characterised in that** the defoamer is present in an amount of 2 g/l to 15 g/l.

12. Composition according to any one of the preceding claims, **characterised in that** it contains an antifreeze agent.

13. Composition according to claim 12, **characterised in that** said antifreeze agent is selected from the group consisting of monoethylene glycol, diethylene glycol, propylene glycol and glycerol.

14. Composition according to claim 12 or 13, **characterised in that** said antifreeze agent is present in an amount of 40 g/l to 150 g/l, preferably in an amount of 80 g/l to 120 g/l.

15. Composition according to any one of the preceding claims, **characterised in that** chlorpropham forms an emulsified phase together with the surface-active agent(s).

16. Composition according to any one of the preceding claims, **characterised in that** it consists of water, the active agent chlorpropham and the surface-active agent(s) mentioned, with antifreeze-agent and/or antifoaming agent being optionally contained in addition thereto.

17. Use of the composition according to any one of the preceding claims for inhibiting the germination of potatoes.

18. Use of the composition according to any one of claims 1 to 17 as a herbicide.

19. Use according to claim 18, **characterised in that** the rate of application is 2000 to 3000 g of chlorpropham per ha.

## Revendications

1. Composition aqueuse destinée à une utilisation en tant qu'agent anti-germinatif pour les pommes de terre ainsi qu'en tant qu'herbicide, comprenant une combinaison de chlorprophame et au moins un tensio-actif, **caractérisée en ce que** la composition est une émulsion aqueuse, qui ne contient pas d'huiles ou de solvants, dans laquelle le chlorprophame est présent en une proportion quantitative d'au moins 20 g/l à 400 g/l et la proportion de tensio-actif(s) est de 70 g/l à 150 g/l et dans laquelle le tensio-actif/les tensio-actifs est/sont choisis dans le groupe constitué par les polyglycoléthers d'alcool gras, les esters phosphoriques de polyglycoléther d'alcool gras, les esters de sorbitane, les esters de sorbitane ethoxylés, et les alcools polyéthoxylés.

2. Composition selon la revendication 1, **caractérisée en ce que** le chlorprophame est présent en une quantité de 50 g/l à 200 g/l, de préférence de 75 g/l à 125 g/l.

3. Composition selon la revendication 1, **caractérisée en ce que** le polyglycoléther d'alcool gras est un dérivé polyglycoléther de l'alcool laurylique, de l'alcool oléylique, ou du tridécanol, l'éthoxy(5)-monooléyléther étant particulièrement préférée.

4. Composition selon la revendication 1, **caractérisée en ce que**, quant à l'ester phosphorique de polyglycoléther d'alcool gras, il s'agit d'un ester phosphorique d'acide éthoxy(5)-isotridécanoïque.

5. Composition selon la revendication 1, **caractérisée en ce que** l'ester de sorbitane est choisi dans le groupe constitué par le monolaurate de sorbitane, le monooléate de sorbitane, le sesquioléate de sorbitane, le trioléate de sorbitane et le monoisostéarate de sorbitane.

6. Composition selon la revendication 1, **caractérisée en ce que**, quant aux esters de sorbitane ethoxylés, il s'agit d'esters de sorbitane ayant de 4 à 25 unités éthoxy, de préférence d'esters de sorbitane ayant 15 à 20 unités éthoxy.

7. Composition selon la revendication 6, **caractérisée en ce que**, quant aux esters de sorbitane ethoxylés, il s'agit de dérivés de monolaurate de sorbitane ou de monooléate de sorbitane, le monolaurate d'acide poly(20)-éthoxylsorbitanique étant particulièrement préféré.

8. Composition selon la revendication 1, **caractérisée en ce que**, quant aux alcools éthoxylés, il s'agit d'alcools éthoxylés ayant de 5 à 10 unités éthoxy, l'éthoxy(7)-tridécanol étant particulièrement préféré.

9. Composition selon l'une quelconque des revendications précédentes, **caractérisée en ce qu'**elle comprend un agent anti-mousse.

10. Composition selon la revendication 9, **caractérisée en ce que** l'agent anti-mousse est choisi dans le groupe constitué par Rhodorsil Antifoam 416^{®}, Rhodorsil Antifoam 426^{®}, Rhodorsil Antifoam 426R^{®}, Rhodorsil Antifoam 432^{®}, Rhodorsil Antifoam 454^{®}, Tensiofix LO 51^{®} et Atplus 702^{®}.

11. Composition selon la revendication 9 ou 10, **caractérisée en ce que** l'agent anti-mousse est présent en une quantité de 2 g/l à 15 g/l.

12. Composition selon l'une quelconque des revendications précédentes, **caractérisée en ce qu'**elle contient un agent anti-gel.

13. Composition selon la revendication 12, **caractérisée en ce que** l'agent anti-gel est choisi dans le groupe constitué par le monoéthylèneglycol, le diéthylèneglycol, le propylèneglycol et le glycérol.

14. Composition selon la revendication 12 ou 13, **caractérisée en ce que** l'agent anti-gel est présent en une quantité de 40 g/l à 150 g/l, de préférence en une quantité de 80 g/l à 120 g/l.

15. Composition selon l'une quelconque des revendications précédentes, **caractérisée en ce que** le chlorprophame forme une phase émulsifiée avec le/les tensio-actif(s).

16. Composition selon l'une quelconque des revendications précédentes, **caractérisée en ce qu'**elle est constituée d'eau, de l'ingrédient actif, le chlorprophame, et du/des tensio-actif(s) cités, en outre des agents anti-gel et/ou anti-mousse pouvant être éventuellement contenus.

17. Utilisation de la composition selon l'une quelconque des revendications précédentes pour empêcher la germination de pommes de terre.

18. Utilisation de la composition selon l'une quelconque des revendications 1 à 17 en tant qu'herbicide.

19. Utilisation selon la revendication 18, **caractérisée en ce que** la quantité d'application est de 2 000 à 3 000 g de chlorprophame par hectare.
